# EUROPEAN PATENT SPECIFICATION

(11) **EP 2 354 957 B1**
(45) Date of publication and mention of the grant of the patent: **06.11.2013**
(21) Application number: 11152863.4
(22) Date of filing: 01.02.2011
(51) Int. Cl.: G06F 13/38

(54) **Analog signal selection method and circuit**
Analoges Signalauswahlverfahren und Schaltung
Procédé de sélection de signal analogique et circuit

(30) Priority: 09.02.2010 TR 201000986
(43) Date of publication of application: 10.08.2011
(73) Proprietor: Vestel Elektronik Sanayi ve Ticaret A.S., 45030 Manisa (TR)
(72) Inventor: Yilmazlar Ismail, 45030, Manisa (TR)
(74) Representative: Cayli, Hülya

(56) References cited:
- EP-A2- 1 970 817
- JP-A- 11 261 910

## Description

### Field of Invention

Present invention is related to a method and circuit which solve port allocation problem for analog signal selection, which is required in TV, AV receiver etc., by expanding ports.

### Prior Art

TV sets use a great number of analog input signals during internal processes. However, most of ICs (Integrated Circuit) such as A/D converter (ADC), video decoder, audio decoder in a TV set, cannot handle all of said analog inputs since said ICs do not have enough analog signal inputs. To accomplish explained problem, port controlled analog switch is used. By using said analog switch, 2ⁿ analog signals are switched for used n ports. For instance, to switch 4 analog signals, 2 General Purpose Input Output (GPIO) ports should be used; to switch 8 analog signals, 3 GPIO ports should be used. Thus, more GPIO ports are required in order to process more analog signals, and this cause port allocation problem.

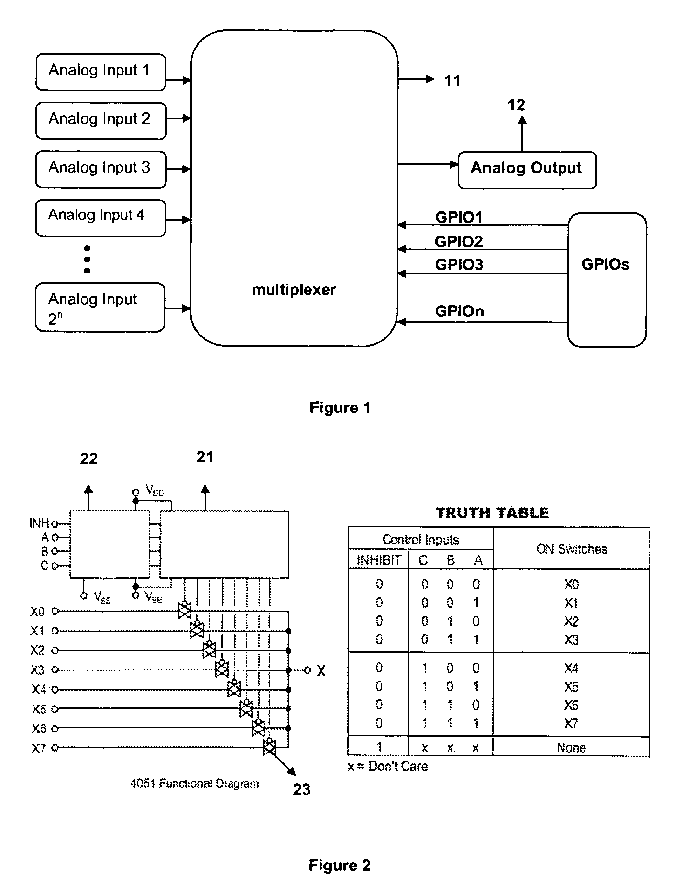

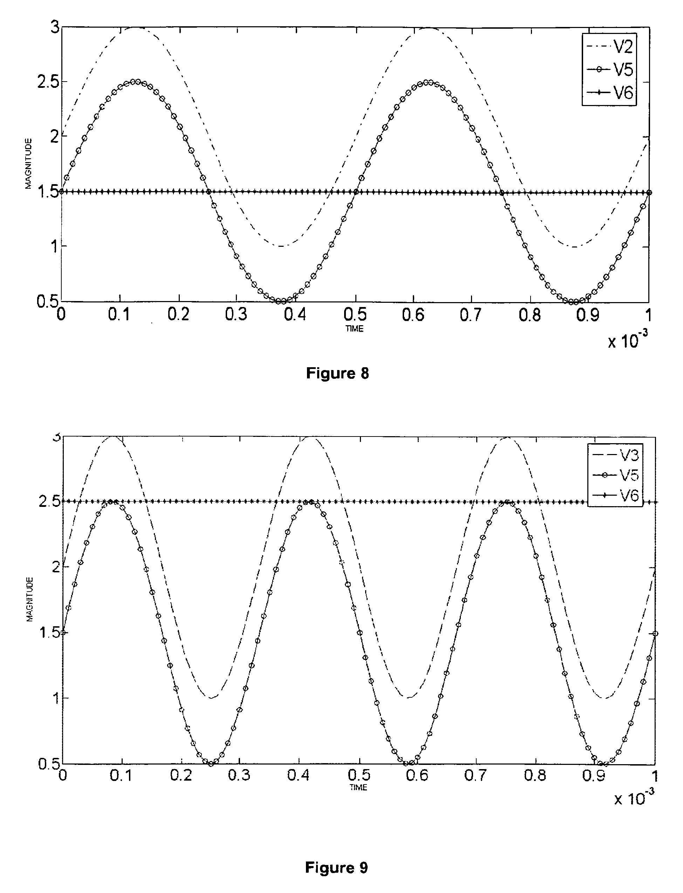

As in the case of the example illustrated in Figure 1 with respect to the prior art, analog inputs 1 to 2ⁿ and control signals, which switch analog signals, sent through GPIO ports 1 to n are shown. Said analog and control signals are processed by a multiplexer (11) and required analog output (12) is obtained. As represented in Figure 2, 8 analog input signals (XO - X7) are switched by a binary decoder (21) by using said control signals (A, B, C). In Figure 2; A, B, C represent said control signals sent through 3 GPIO ports to switch said 8 analog input signals (XO - X7) and X (23) represents the required output. As said GPIO ports output digital signals, truth table, which is shown in Figure 2, explains switching process for 8 states according to high and low conditions of 3 control signals (A, B, C). At each state an input signal is connected to the output.

In patent document, EP 1970817 (A2), a method and circuit for expanding ports is described. According to mentioned application, a plurality of ports is controlled by a microprocessor in order to activate or deactivate various devices. In EP 1970817 (A2), the status of more than one GPIO ports is controlled by a port controller and said port controller is controlled by only one port of said microprocessor. To control said GPIO ports, a pulse width modulation (PWM) source within a microprocessor is used. By using explained method, standby on/off, panel power on/off, backlight on/off ports are controlled in sequence.

According to the mentioned system in the patent application with publication number US 2006/047866 A1, a computer system is provided in which a central processing unit (CPU), a memory and a peripheral are connected to a common system bus and which includes a direct memory access control circuit (DMAC) for controlling data transfer between the memory and the peripheral or between a first area and a second area within the memory by using the system bus without involving the CPU in accordance with an instruction from the CPU. The computer system also includes a variable pulse generation unit, connected to the system bus, for generating a pulse signal having a period and a pulse width that are specified by the CPU. In the said computer system, the DMAC is arranged to control the data transfer between the first and second areas within the memory in accordance with the pulse signal generated by the variable pulse generation unit. However, in US 2006/047866, the PWM signal does not control the transfer rate of the DMA controller by altering a current level, instead the timing of the PWM signal directly controls the behaviour of the DMA controller.

In another patent document, KR 20040093890 (A), a device for expanding ports is provided to communicate with a desired external device with a simple selection operation on a signal processing system by offering a port expanding device equipped with expansion ports. Said device comprises a serial port signal-TTL (Transistor-Transistor Logic) level converter, a controller and a multiplexer. Said serial port signal-TTL (Transistor-Transistor Logic) level converter is connected to a serial port, and mutually converts a signal of the serial port and a TTL signal. Moreover, said controller generates a signal for selecting the desired external device by a control signal of the signal processing system. Furthermore, said multiplexer performs a need switching operation by the signal generated from the controller. Said TTL-serial port signal level converter is operated by the switching operation of the multiplexer and mutually converts the TTL signal and the serial port signal. The expanded serial port is connected to the TTL-serial port signal level converter and the external device.

### Brief Description of the Invention

Present invention is a method as defined in claim 4 and a circuit system according to claim 1, which solve port allocation problem for analog signal selection, which is required in TV, AV receiver etc., by expanding ports. To solve port allocation problem, GPIO port which has PWM signal output capability is used. Thus, according to PWM characteristics, duty cycle of PWM signal is adjusted and different voltage levels are obtained. Moreover, an analog input signal selection circuit is designed. By using said different voltage levels as a control input of analog input signal selection circuit, required analog input signal is selected and sent to the output of said analog input signal selection circuit.

### Object of the Invention

The object of the present invention is to solve port allocation problem for analog signal selection.

Another object of the present invention is to solve port allocation problem by using one GPIO port which has PWM signal output capability.

Another object of the present invention is to select the required analog input signal by adjusting duty cycle of PWM signal.

Another object of the present invention is to independently select the required analog input signal.

### Brief Description of the Drawings

Figure 1: shows block diagram of prior art application.
Figure 2: shows circuit diagram of prior art application.
Figure 3: shows PWM signal
Figure 4: shows block diagram of the present invention.
Figure 5: shows circuit diagram of the present invention.
Figure 6: shows all input signals and one output signal for a reference voltage.
Figure 7: shows circuit behaviour for 0,5V control signal.
Figure 8: shows circuit behaviour for 1,5V control signal.
Figure 9: shows circuit behaviour for 2,5V control signal.
Figure 10: shows circuit behaviour for 3,5V control signal.

The parts shown in the figures are individually numbered and the corresponding terms of these numbers are as follows:
PWM signal (1)
High voltage (Vcc) time (2)
Multiplexer (11)
Analog output for prior art (12)
Control inputs for prior art (A, B, C)
Analog inputs for prior art (XO - X7)
Binary to 1-of-8 decoder with inhibit (21)
Level converter (22)
Analog output for prior art (23)
Analog signal selection circuit (31)
GPIO port with PWM signal output capability (32)
Analog output (33)
Anaolg input signals (V1-V4)
Analog output signal at the load (V5)
Control input signal (V6)

### Detailed Description of the Invention

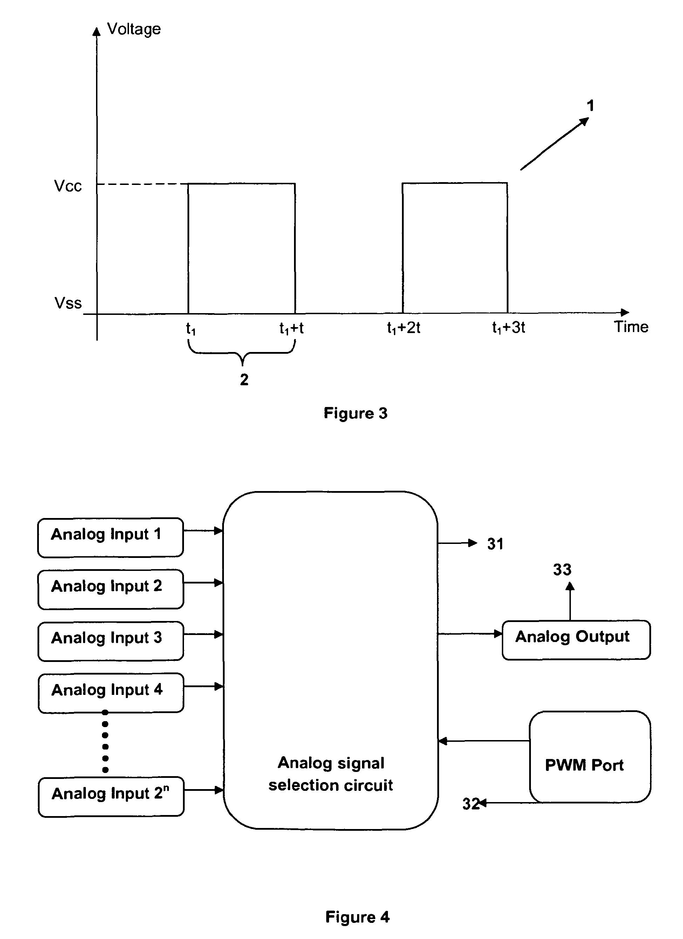

Pulse Width Modulation (PWM) is a technique in which preferred analog signal is obtained in the output by controlling the width of generated pulses. PWM waveform is a rectangular pulse wave (1) as shown in Figure 3. In Figure 3, PWM signal (1) has a high value Vcc, and a low value Vss. Generally in the applications Vss value is 0V. In the PWM description, it is said that generated pulse's width is controlled, which is meant that duty cycle of PWM signal (1) is controlled. Duty cycle can be described as ratio of high voltage (Vcc) time (2) of the said PWM signal (1) in a period to period of said PWM signal (1).

Voltage value of said PWM signal (1) which is read on a voltmeter will be the average value of said PWM signal (1). Since the low value (Vss) of said PWM signal (1) is 0V, average value can be calculated as multiplication of high value (Vcc) of said PWM signal (1) with duty cycle of said PWM signal (1). Thus, by configuring duty cycle, voltage value of said PWM signal (1) can be customized. For instance as shown in Figure 3, high voltage (Vcc) time (2) of said PWM signal (1) in a period is ((t₁+t)-t₁) and period of said PWM signal (1) is ((t₁+2t)-t₁). Thus, duty cycle is calculated as ((t₁+t)-t₁)/ ((t₁+2t)-t₁)=1/2 which means 50%. Moreover, the average value of said PWM signal (1) is calculated as (Vccx50%). As the Vcc value can be taken as 5V, average value of said PWM signal (1) will be 5x50%=2,5V.

Thus, in present invention, by using described property of PWM signal (1), an analog signal selection method which solves port allocation problem can be described. As described in prior art, for 2ⁿ inputs, n GPIO ports are required. However, by using GPIO port which has PWM signal output capability, just one port can switch 2ⁿ analog input signals.

In Figure 4, block diagram of present invention is given. Analog inputs 1 to 2n represent the analog inputs which will be selected by an analog input selection circuit (31). As shown in Figure 4, one GPIO port (32) is used to control analog signal selection. According to explained PWM feature, said GPIO port (32) should have PWM signal output capability. Due to adjustable duty cycle of PWM signal, system can get different DC voltage values. By applying said different DC voltages to analog signal selection circuit (31), desired analog input signal can be obtained at analog output (33) of analog signal selection circuit (31).

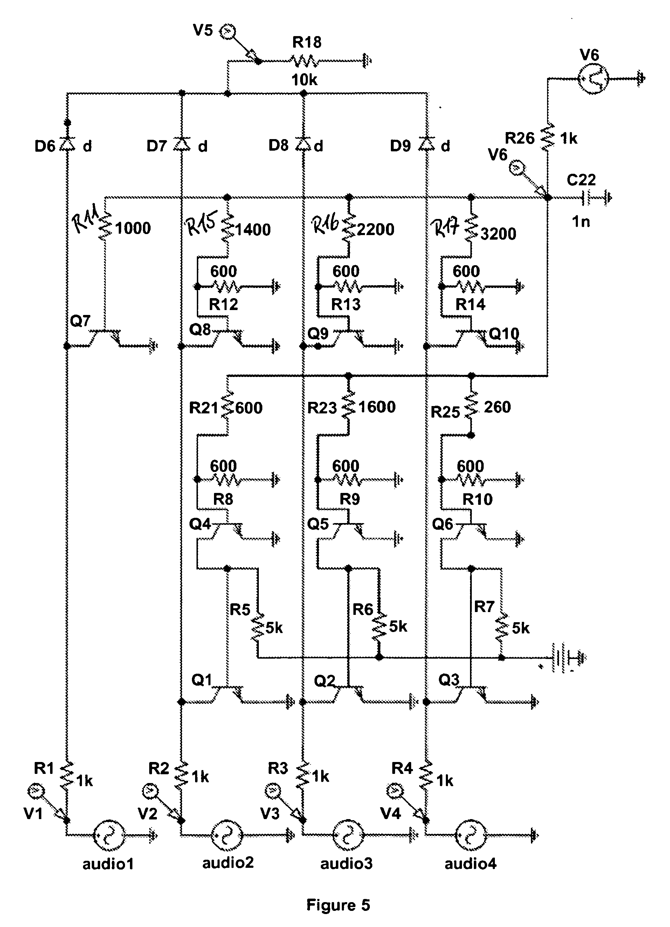

Figure 5 is an exemplary analog signal selection circuit diagram of present invention. According to Figure 5, by referencing Figure 4, n is desired as "2" and audio1, audio2, audio3 and audio4 represent 4 analog inputs of the system. Said analog inputs have 1KHz, 2KHz, 3KHz and 4KHz frequency respectively. In Figure 5, PWM voltage source represents the GPIO port which has PWM signal output capability described in Figure 4. Moreover, resistor R18 and capacitor C22 is used as low pass filter to get different analog levels for different duty cycles of PWM signal input. Diodes D6, D7, D8 and D9 are used to send selected signal to the load. Resistors R1, R2, R3 and R4 denote source impedance. Transistors Q1, Q2, Q3, Q7, Q8, Q9, and Q10 are used to select desired analog input signal to be sent to the load. If the transistor is in conduction mode, analog input signal connected to that transistor will be sent to ground, else it will be sent to the load. Resistors R8, R9, R10, R11, R15, R16, R17, R21, R23, R25 which are connected to the base of the transistors are used as voltage dividers to activate or deactivate transistors for selection. A 10k resistor at the output of the circuit represents load. Furthermore, voltage probes, represented as V1 to V6, which are used to analyze said input signals (audio1 to audio4), output signal and control input signal sent by PWM voltage source. By using described circuit, analog input signal selection can be done independently where the inputs are not necessarily activated by an activating sequence. In other words, analog input signal required by system can be selected independently.

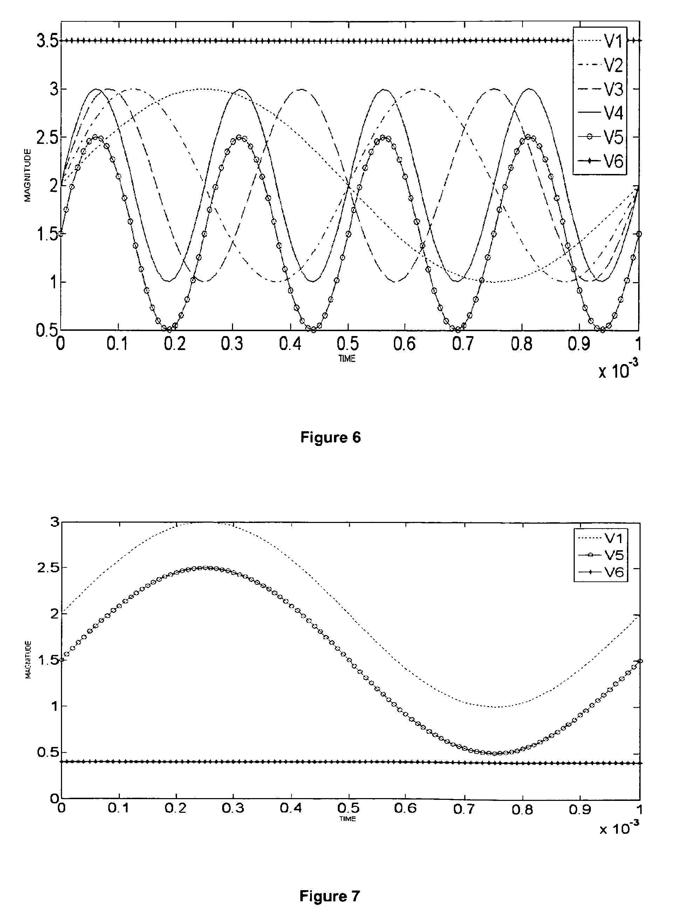

Figure 6 represents all input signals which are marked with V1-V4 and V6 in Figure 5, and output signal (V5) for a reference signal.

In Figure 7; selected analog input signal audio1 (V1), output signal (V5) at the load and control input signal (V6), which are according to exemplary circuit which is explained above and given in Figure 5, are shown. To select audio1 input, voltage across the capacitor C22 should be around 0,5V. Thus, base voltages of transistors Q7, Q8, Q9 and Q10 are lower than 0,6V and said transistors are in cut-off mode. Moreover, base voltages of transistors Q1, Q2 and Q3 are higher than 0,6V. Thus, Q1, Q2 and Q3 are in conduction mode. Since Q1, Q2 and Q3 are in conduction mode, analog input signals audio2, audio3 and audio4 which are connected to said transistors are sent to the ground. Therefore, since Q7 is in cut-off mode, analog input signal audio1 is sent to the output of analog signal selection circuit.

In Figure 8; selected analog input signal audio2 (V2), output signal (V5) at the load and control input signal (V6), which are according to exemplary circuit which is explained above and given in Figure 5, are shown. To select audio2 input, voltage across the capacitor C22 should be around 1,5V. Thus, base voltages of transistors Q8, Q9 and Q10 are lower than 0,6V and said transistors are in cut-off mode. Moreover, base voltages of transistors Q7, Q2 and Q3 are higher than 0,6V. Thus, Q7, Q2 and Q3 are in conduction mode. Since Q7, Q2 and Q3 are in conduction mode, analog input signals audio1, audio3 and audio4 which are connected to said transistors are sent to the ground. As the voltage across the capacitor C22 is 1,5V, Q4 is in saturation mode and base voltage of Q1 is 0,2V. Thus, Q1 is in cut-off mode. Therefore, since Q1 and Q8 are in cut-off mode, analog input signal audio2 is sent to the output of analog signal selection circuit.

In Figure 9; selected analog input signal audio3 (V3), output signal (V5) at the load and control input signal (V6), which are according to exemplary circuit which is explained above and given in Figure 5, are shown. To select audio3 input, voltage across the capacitor C22 should be around 2,5V. Thus, base voltages of transistors Q9 and Q10 are lower than 0,6V and said transistors are in cut-off mode. Moreover, base voltages of transistors Q7, Q8 and Q3 are higher than 0,6V. Thus, Q7, Q8 and Q3 are in conduction mode. Since Q7, Q8 and Q3 are in conduction mode, analog input signals audio1, audio2 and audio4 which are connected to said transistors are sent to the ground. As the voltage across the capacitor C22 is 2,5V, Q5 is in saturation mode and base voltage of Q2 is 0,2V. Thus, Q2 is in cut-off mode. Therefore, since Q2 and Q9 are in cut-off mode, analog input signal audio3 is sent to the output of analog signal selection circuit.

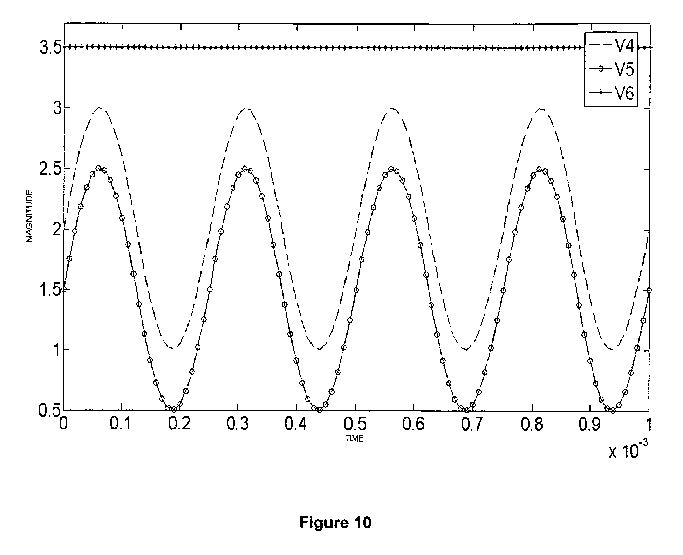

In Figure 10; selected analog input signal audio4 (V4), output signal (V6) at the load and control input signal (V5), which are according to exemplary circuit which is explained above and given in Figure 5, are shown. To select audio4 input, voltage across the capacitor C22 should be around 3,5V. Thus, base voltage of transistor Q10 is lower than 0,6V and said transistor is in cut-off mode. Moreover, base voltages of transistors Q7, Q8 and Q9 are higher than 0,6V. Thus, Q7, Q8 and Q9 are in conduction mode. Since Q7, Q8 and Q9 are in conduction mode, analog input signals audio1, audio2 and audio3 which are connected to said transistors are sent to the ground. As the voltage across the capacitor C22 is 3,5V, Q6 is in saturation mode and base voltage of Q3 is 0,2V. Thus, Q3 is in cut-off mode. Therefore, since Q3 and Q10 are in cut-off mode, analog input signal audio4 is sent to the output of analog signal selection circuit.

Above explained embodiment is for 4 analog signal input condition. By adding new voltage dividers and transistors to exemplary analog signal selection circuit, analog signal input numbers can be increased.

## Claims

1. An analog input signal selection system for systems, which have more than one analog input signal, to select the required analog input signal **characterized in that** it comprises;
- one GPIO port which has PWM signal output capability (32),
- a low pass filter (R26, C22) being connected to said GPIO port to get different analog levels for different duty cycles of the PWM signal,
- transistors (Q1, Q2, Q3, Q7, Q8, Q9, Q10) to select the required analog input signal,
- resistors (R8, R9, R10, R11, R15, R16, R17, R21, R23, R25) which are connected to the base of the transistors to be used as voltage dividers to activate or deactivate transistors for selection,
- diodes (D6, D7, D8, D9) to send the selected analog input signal to an output of the analog input signal selection system.

2. The system according to claim 1 **characterized in that** it further comprises a PWM source, which is connected to said one GPIO port of said analog input signal selection system, to output a PWM signal (1).

3. The system according to claim 2 **characterized in that** said PWM signal (1) is used as a control input by said analog input signal selection system.

4. An analog input signal selection method for systems, which have more than one analog input signal, to select the required analog input signal **characterized in that** the method comprises the following steps:
- connecting a PWM source to one GPIO port of the analog input signal selection system of claim 1;
- sending a PWM signal (1) input which is generated by said PWM source, to the system
- adjusting a duty cycle of said PWM signal to switch transistors
- activating or deactivating transistors for selection by resistors which are connected as voltage dividers to the base of said transistors,
- sending the selected required analog input signal to an output of the analog input signal selection system.

5. A method according to claim 4 **characterized in that** said transistors are switched by a control input which is obtained by the connected PWM source.

6. A method according to claim 4 **characterized in that** different DC voltage values are obtained by adjusting said duty cycle of said PWM signal (1).

7. A method according to claim 4 **characterized in that** said DC voltage values are divided by said resistors to activate or deactivate said transistors for selection.

## Patentansprüche

1. Analoges Eingangssignal-Auswahlsystem für Systeme, die mehr als ein analoges Eingangssignal besitzen, um das erforderliche analoge Eingangssignal auszuwählen, **dadurch gekennzeichnet, dass** es umfasst:
- einen GPIO-Kanal, der eine PWM-Signalausgabeeignung (32) besitzt,
- einen Tiefpassfilter (R26, C22) verbunden mit dem GPIO-Kanal, um verschiedene analoge Pegel für verschiedene Betriebszyklen des PWM-Signals zu erhalten,
- Transistoren (Q1, Q2, Q3, Q7, Q8, Q9, Q10) zum Auswählen des erforderlichen analogen Eingangssignals,
- Wiederstände (R8, R9, R10, R11, R15, R16, R17, R21, R23, R25), die mit der Basis der Transistoren verbunden sind, zur Verwendung als Spannungsteiler, zum Aktivieren oder Deaktivieren der Transistoren zur Auswahl,
- Dioden (D6, D7, D8, D9), um das ausgewählte analoge Eingangssignal an einen Ausgang des analogen Eingangssignal-Auswahlsystems zu senden.

2. System nach Anspruch 1, **dadurch gekennzeichnet, dass** es des Weiteren eine PWM-Quelle umfasst, die mit dem einen GPIO-Kanal des analogen Eingangssignal-Auswahlsystems verbunden ist, um ein PWM-Signal (1) auszugeben.

3. System nach Anspruch 2, **dadurch gekennzeichnet, dass** das PWM-Signal (1) als Steuerungseingabe durch das analoge Eingangssignal-Auswahlsystem genutzt wird.

4. Analoges Eingangssignal-Auswahlverfahren für Systeme, die mehr als ein analoges Eingangssignal besitzen, um das erforderliche analoge Eingangssignal auszuwählen, **dadurch gekennzeichnet, dass** das Verfahren die folgenden Schritte umfasst:
- Verbinden einer PWM-Quelle mit einem GPIO-Kanal des analogen Eingangssignal-Auswahlsystems nach Anspruch 1,
- Übermitteln eines PWM-Signals (1) als Eingabe, die durch die PWM-Quelle erzeugt wird, an das System,
- Einstellen eines Betriebszyklus des PWM-Signals, um Transistoren zu schalten,
- Aktivieren oder Deaktivieren von Transistoren für eine Auswahl durch Wiederstände, die als Spannungsteiler mit der Basis der Transistoren verbunden sind,
- Übermitteln des ausgewählten erforderlichen analogen Eingangssignals an ein Ausgang des analogen Eingangssignal-Auswahlsystems.

5. Verfahren nach Anspruch 4, **dadurch gekennzeichnet, dass** die Transistoren durch eine Steuerungseingabe geschaltet werden, die durch die verbundene PWM-Quelle erhalten wird.

6. Verfahren nach Anspruch 4, **dadurch gekennzeichnet, dass** verschiedene Gleichspannungswerte durch Einstellen des Betriebszykluses des PWM-Signals (1) erhalten werden.

7. Verfahren nach Anspruch 4, **dadurch gekennzeichnet, dass** die Gleichspannungswerte durch die Widerstände geteilt werden, um die Transistoren für eine Auswahl zu aktivieren oder zu deaktivieren.

## Revendications

1. Système de sélection de signal d'entrée analogique pour des systèmes, qui ont plus d'un signal d'entrée analogique, pour sélectionner le signal d'entrée analogique nécessaire, **caractérisé en ce qu'**il comprend :
- un port GPIO qui a une capacité de sortie de signal PWM (32),
- un filtre passe-bas (R26, C22) connecté audit port GPIO pour obtenir des niveaux analogiques différents pour des rapports cycliques différents du signal PWM,
- des transistors (Q1, Q2, Q3, Q7, Q8, Q9, Q10) pour sélectionner le signal d'entrée analogique nécessaire,
- des résistances (R8, R9, R10, R11, R15, R16, R17, R21, R23, R25) qui sont connectées à la base des transistors pour être utilisées comme des diviseurs de tension pour activer ou désactiver des transistors pour la sélection,
- des diodes (D6, D7, D8, D9) pour transmettre le signal d'entrée analogique sélectionné à une sortie du système de sélection de signal d'entrée analogique.

2. Système selon la revendication 1, **caractérisé en ce qu'**il comprend en outre une source PWM, qui est connectée audit un port GPIO dudit système de sélection de signal d'entrée analogique, pour délivrer en sortie un signal PWM (1).

3. Système selon la revendication 2, **caractérisé en ce que** ledit signal PWM (1) est utilisé comme une entrée de commande par ledit système de sélection de signal d'entrée analogique.

4. Procédé de sélection de signal d'entrée analogique pour des systèmes, qui ont plus d'un signal d'entrée analogique, pour sélectionner le signal d'entrée analogique nécessaire, **caractérisé en ce que** le procédé comprend les étapes suivantes :
- la connexion d'une source PWM à un port GPIO du système de sélection de signal d'entrée analogique selon la revendication 1,
- la transmission d'une entrée de signal PWM (1), qui est générée par ladite source PWM, au système
- le réglage d'un rapport cyclique dudit signal PWM à des transistors de commutation
- l'activation ou la désactivation de transistors pour la sélection par des résistances qui sont connectées comme des diviseurs de tension à la base desdits transistors,
- la transmission du signal d'entrée analogique nécessaire sélectionné à une sortie du système de sélection de signal d'entrée analogique.

5. Procédé selon la revendication 4, **caractérisé en ce que** lesdits transistors sont commutés par une entrée de commande qui est obtenue par la source PWM connectée

6. Procédé selon la revendication 4, **caractérisé en ce que** des valeurs de tension continue différentes sont obtenues en réglant ledit rapport cyclique dudit signal PWM (1).

7. Procédé selon la revendication 4, **caractérisé en ce que** lesdites valeurs de tension continue sont divisées par lesdites résistances pour activer ou désactiver lesdits transistors pour la sélection.
